# EUROPEAN PATENT SPECIFICATION

(11) **EP 4 228 266 B1**
(45) Date of publication and mention of the grant of the patent: **05.08.2026**
(21) Application number: 21877648.2
(22) Date of filing: 06.10.2021
(51) Int. Cl.: H04N 19/59, G06T 1/00

(54) **IMAGE PROCESSING DEVICE, IMAGE PROCESSING METHOD, AND NON-TRANSITORY COMPUTER READABLE MEDIUM WHEREON IMAGE PROCESSING PROGRAM IS STORED**
BILDVERARBEITUNGSVORRICHTUNG, BILDVERARBEITUNGSVERFAHREN UND NICHTTRANSITORISCHES COMPUTERLESBARES MEDIUM MIT DARAUF GESPEICHERTEM BILDVERARBEITUNGSPROGRAMM
DISPOSITIF DE TRAITEMENT D'IMAGE, PROCÉDÉ DE TRAITEMENT D'IMAGE ET SUPPORT NON TRANSITOIRE LISIBLE PAR ORDINATEUR STOCKANT UN PROGRAMME DE TRAITEMENT D'IMAGE

(30) Priority: 08.10.2020 JP 2020170261
(43) Date of publication of application: 16.08.2023
(73) Proprietor: RIKEN, Wako-shi, Saitama 351-0198 (JP); Avatarin Inc., Tokyo 103-0022 (JP)
(72) Inventor: NODA Shigeho, Wako-shi, Saitama 351-0198 (JP); YOKOTA Hideo, Wako-shi, Saitama 351-0198 (JP); FUKABORI Akira, Tokyo 103-0022 (JP)
(74) Representative: Pfenning, Meinig & Partner mbB
(86) International application number: PCT/JP2021/036928
(87) International publication number: WO 2022/075349

(56) References cited:
- WO-A1-2018/220260
- JP-A- 2012 194 969
- JP-A- 2016 076 069
- SANDINI G ET AL: "A retina-like CMOS sensor and its applications", SENSOR ARRAY AND MULTICHANNEL SIGNAL PROCESSING WORKSHOP. 2000. PROCEE DINGS OF THE 2000 IEEE 16-17 MARCH 2000, PISCATAWAY, NJ, USA,IEEE, 16 March 2000 (2000-03-16), pages 514 - 519, XP010516143, ISBN: 978-0-7803-6339-7
- SANDINI G ET AL: "THE PROJECT SVAVISCA: A SPACE-VARIANT COLOR CMOS SENSOR", PROCEEDINGS OF SPIE, IEEE, US, vol. 3410, no. 34-45, 18 May 1998 (1998-05-18), pages 34 - 45, XP008001166, ISBN: 978-1-62841-730-2, DOI: 10.1117/12.324020
- SAMIR SHAH ET AL: "Visual Information Processing in Primate Cone Pathways-Part I: A Model", IEEE TRANSACTIONS ON SYSTEMS, MAN, AND CYBERNETICS, PART B CYBERNETICS, IEEE SERVICE CENTER, PISCATAWAY, NJ, US, vol. 26, no. 2, 1 April 1996 (1996-04-01), XP011056487, ISSN: 1083-4419

## Description

### Technical Field

The present invention relates to an image processing apparatus, an image processing method, and an image processing program.

### Background Art

With the spread of video streaming and Web meetings conducted through high-speed networks, there is concern about an excessive increase in transfer data. It has been strongly desired to provide accurate visual information to external apparatuses through networks and thereby to share them with others. However, high-speed networks may not be available for remote collaborative work and telemedicine as well as entertainment in certain situations (e.g., situations where satellite communication is required, or communication has to be performed in mountainous areas).

Patent Literature 1 discloses an image compression system including an image operation apparatus operated under program control, an image compression apparatus operated under program control, and an image compression operation apparatus in which a user operates an image compression process by designating an input source of an image file to be compressed and an output destination of the compressed image file. For each image to be compressed input from the image operation apparatus, the image compression apparatus individually performs character recognition of the compressed image by using reference compression ratio data; specifies a compression ratio based on a decision tree in which a plurality of nodes, which are data containing compression ratios, are recorded in association with nodes containing compression ratios higher than the compression ratio and nodes containing compression ratios lower than the compression ratio, respectively, reference difference ratio data, and difference ratio data in which reference image character recognition result data are compared with compressed image character recognition result data; compresses the image to be compressed at the specified compression ratio; repeats the character recognition, the specifying of the compression ratio, and the compression at the specified compression ratio, respectively, the number of times the evaluation data indicates; and outputs a compressed result image obtained by the repetition.

Patent Literature 2 discloses a video camera imaging apparatus including a pair of video cameras for left and right eyes, an image recognition apparatus that receives video signals of the video cameras and performs image processing thereon, and a monitor device that receives and displays video signals provided from the image recognition apparatus, in which the video camera imaging apparatus displays, on the monitor, an imitation image of an image that can be obtained when a human being sees an object or an image that is actually and visually obtained by the naked eye, and a gazing motion of the human being is imitated by moving the pair of video cameras to desired positions.

Patent Literature 3 discloses a method including receiving unprocessed image data corresponding to a series of unprocessed images, and processing the unprocessed image data by an encoder of a processing apparatus and thereby generating encoded data. The encoder is characterized by an input/output conversion that substantially imitates an input/output conversion of at least one retina cell of a retina of a vertebrate. The method also includes processing the encoded data by applying a dimension reducing algorithm to the encoded data and thereby generating encoded data of which the dimensions have been reduced. The dimension reducing algorithm is configured so as to compress the amount of information contained in the encoded data. An apparatus and a system that can be used with the above-described method will also be disclosed.

Patent Literature 4 discloses a method including: a step of receiving raw image data corresponding to a series of raw images; a step of processing the raw image data in order to generate encoded data by using an encoder characterized by an input/output conversion that substantially imitates an input/output conversion of a retina of a vertebrate, the processing step including applying a spatiotemporal conversion to the raw image data to generate a retina output cell response value, the application of the spatiotemporal conversion including application of a single-step spatiotemporal conversion including a series of weights directly determined from experimental data generated by using stimuli including natural scenes; a step of generating encoded data based on the retina output cell response value; and a step of applying a first machine visual algorithm to data that is generated at least partly based on the encoded data.

WO 2018220260 A1 relates to a method for compressing images, an apparatus for compressing images, and computer program for compressing images.

SANDINI G ET AL: "A retina-like CMOS sensor and its applications", SENSOR ARRAY AND MULTICHANNEL SIGNAL PROCESSING WORKSHOP.2000.PROCEE DINGS OF THE 2000 IEEE 16-17 MARCH 2000, PISCATAWAY, NJ, USA, IEEE, 16 March 2000 (2000-03-16), pages 514-519, XP010516143, ISBN:978-0-7803-6339-7 describe a retina-like sensor characterized by a space-variant resolution similar to that of the human retina.

SAMIR SHAN ET AL: "Visual Information Processing in Primate Cone Pathways-Part I: A Model", IEEE TRANSACTIONS ON SYSTEMS, MAN, AND CYBERNETICS, PART B CYBERNETICS, IEEE SERVICE CENTER, PISCATAWAY, NJ, US, vol.26, no. 2, 1 April 1996 (1996-04-01), XP011056487, ISSN:1083-4419 describe a computer retinal model that exhibits some properties found in biological retinas.

### Citation List

### Patent Literature

Patent Literature 1: Japanese Unexamined Patent Application Publication No. 2006-270199
Patent Literature 2: Japanese Patent No. 3520592
Patent Literature 3: Published Japanese Translation of PCT International Publication for Patent Application, No. 2018-514036
Patent Literature 4: Japanese Patent No. 6117206

### Summary of Invention

### Technical Problem

To perform communications and the like with limited network bandwidths, there is a need to reduce transfer data more appropriately to the extent that no problem occurs in image recognition at the transfer destination. In each of the aforementioned Patent Literatures 3 and 4, an encoder that is characterized by an input/output conversion that substantially imitate an input/output conversion in a retina of a vertebrate is used, but there is still room for an improvement therein.

The present invention has been made to solve the above-described problem, and an object thereof is to provide an improved image processing apparatus, an image processing method, and an image processing program using visual recognition of a vertebrate such as a human being.

### Solution to Problem

To solve the above problem, an image processing apparatus according to claim 1, an image processing method according to claim 8, and an image processing program according to claim 16 within the present disclosure are provided. Advantageous embodiments are described in dependent claims.

An image processing apparatus according to a first aspect of the present invention includes:
an image acquisition unit configured to acquire an image;
a first image processing unit configured to perform first image processing on the acquired image, and including a first sampling unit configured to perform first sampling for extracting at least one sample to be processed from the acquired image, and a color detection unit configured to detect colors of the at least one extracted sample; and
a second image processing unit configured to perform second image processing different from the first image processing on the acquired image, and including a second sampling unit configured to perform second sampling for extracting at least one sample to be processed from the acquired image, and a color reduction unit configured to reduce the colors of the at least one extracted sample.

An image processing method according to a second aspect of the present invention includes:
a step of acquiring an image;
a step of performing first image processing on the acquired image, and including performing first sampling for extracting at least one sample to be processed from the acquired image, and detecting colors of the at least one extracted sample; and
a step of performing second image processing different from the first image processing on the acquired image, and including performing second sampling for extracting at least one sample to be processed from the acquired image, and reducing the colors of the at least one extracted sample.

An image processing program according to a third aspect of the present invention causes a computer to perform operations including:
a process for acquiring an image;
a process for performing first image processing on the acquired image, and including performing first sampling for extracting at least one sample to be processed from the acquired image, and detecting colors of the at least one extracted sample; and
a process for performing second image processing different from the first image processing on the acquired image, and including performing second sampling for extracting at least one sample to be processed from the acquired image, and reducing the colors of the at least one extracted sample.

### Advantageous Effects of Invention

According to the present invention, it is possible to provide a new image processing apparatus, an image processing method, and an image processing program using visual recognition of a vertebrate such as a human being.

### Brief Description of Drawings

Fig. 1 is a cross-sectional diagram of a right eye of a person as viewed from above his/her head in some embodiments;
Fig. 2 is a front view for explaining an example of a distribution of different types of retina cells in a human eye in some embodiments;
Fig. 3 is a front view for explaining an example of a distribution of first retina cells (cone cells) of a human eye in some embodiments;
Fig. 4 is a front view for explaining an example of a distribution of second retina cells (rod cells) of a human eye in some embodiments;
Fig. 5 shows conceptual views for explaining an image processing method imitating different types of retina cells of a human eye in some embodiments;
Fig. 6 is a block diagram showing a configuration of an image processing apparatus according to a first embodiment;
Fig. 7 is a diagram for explaining an example of a distribution of different types of sensor units according to the first embodiment;
Fig. 8 is a diagram for explaining an example of a distribution of first sensor units (corresponding to cone cells) according to the first embodiment;
Fig. 9 is a diagram for explaining an example of a distribution of second sensor units (corresponding to rod cells) according to the first embodiment;
Fig. 10 is a block diagram showing a configuration of an image processing apparatus according to a second embodiment;
Fig. 11 is a graph showing an example of a probability distribution for a plurality of first sensor units in a specific region;
Fig. 12 is a graph showing an example of a probability distribution for a plurality of second sensor units in a specific region;
Fig. 13 is a block diagram showing a configuration of an image processing apparatus according to a third embodiment; and
Fig. 14 is a block diagram showing an example of a hardware configuration of an image processing apparatus.

### Description of Embodiments

The present disclosure relates to a technology for carrying out image processing by using image recognition of a vertebrate such as a human being. For example, there are cases where a patient with glaucoma has no subjective symptom despite having a defect in his/her visual field. That is, such a patient may not be aware that he/she is not seeing an object(s) which should be seeable by him/her. The present disclosure proposes an image processing method by which image data (i.e., the volume of image data) is reduced by such an extent that no recognition problem occurs by using the above-described sense of sight and the recognition by a human being.

An image processing apparatus according to some embodiments can be used to appropriately convert image data taken by a camera into a low-resolution image. Further, an image (or video image) transfer system including an image processing apparatus according to some embodiments can be used to take an image, reduce the image data (i.e., the volume of the image data), transfer the reduced image data through a bandwidth-limited network, and then convert the reduced and transferred image data into a high-definition image. An image processing apparatus according to some embodiments can be used to convert image data taken by a low-resolution camera into a high-definition image.

Specific embodiments to which the present invention is applied will be described hereinafter in detail with reference to the drawings. However, the present invention is not limited to the below-shown embodiments. Further, in order to clarify the explanation, the following descriptions and drawings have been simplified as appropriate.

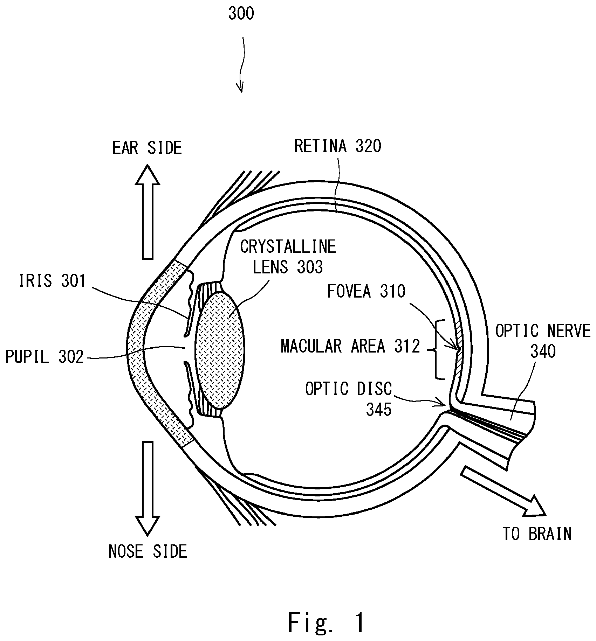

Fig. 1 is a cross-sectional diagram of a right eye of a human being as viewed from above his/her head.

A crystalline lens 303 in an eye 300 of a human being is located behind a pupil 302, and has an ability to change the focal length and thereby focus an object at a variable distance from the observer (i.e., the human being) onto his/her retina 320. Further, the focused image is sent to his/her brain through an optic nerve 340, and it is visually interpreted in the brain. The retina 320 refers to a main part of an inner surface of an eye (e.g., an eye of a human being, an observer, or the like), which includes a group of visual sensors located opposite to the pupil 302 of the eye. A fovea 310 refers to a relatively small central part of the retina that includes a group of a large number of visual sensors capable of obtaining the sharpest vision in the eye and detecting colors with the highest sensitivity. A macular area 312 is a region in the eye or the retina that receives the largest amount of light, and is hence also referred to as the "sharpest visual region".

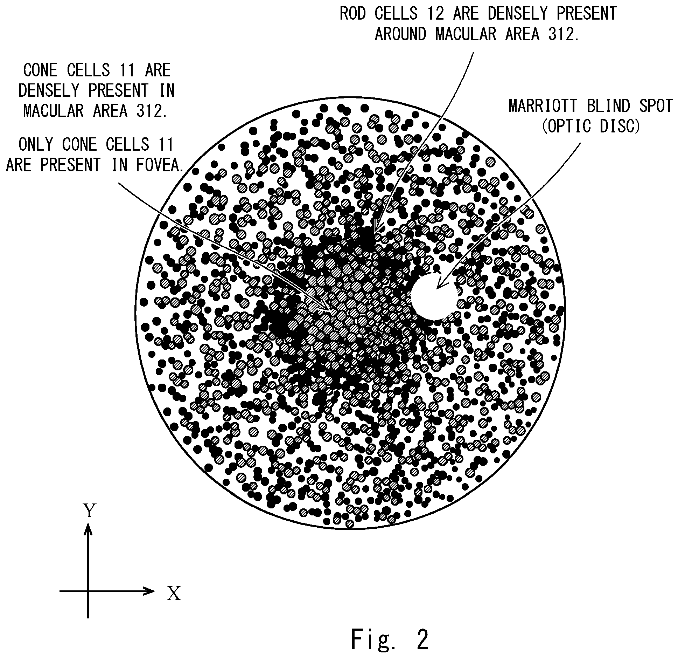

Fig. 2 is a front view for explaining an example of a distribution of different types of retina cells in a human eye. Cone cells 11 (first retina cells) are densely present in the macular area 312. Only cone cells 11 are densely present in the fovea 310. Rod cells 12 (second retina cells) are densely present around the macular area 312. There is no visual cell in an optic disc 345, so it cannot sense light. A visual field corresponding to the optic disc 345 is a scotoma called a Marriott blind spot.

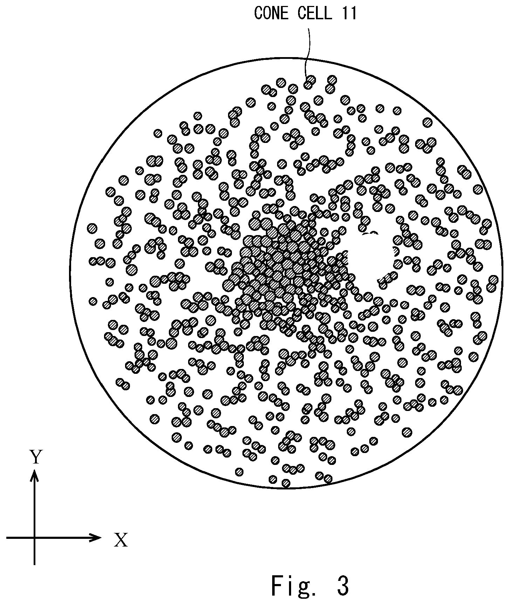

Fig. 3 is a front view for explaining an example of a distribution of the first retina cells (cone cells) in a human eye.

The cone cells 11 recognize colors (e.g., RGB). A large number of cone cells 11 (e.g., about 6 million in one eye) are densely present in the macular area 312, which is located at the center of the retina 320.

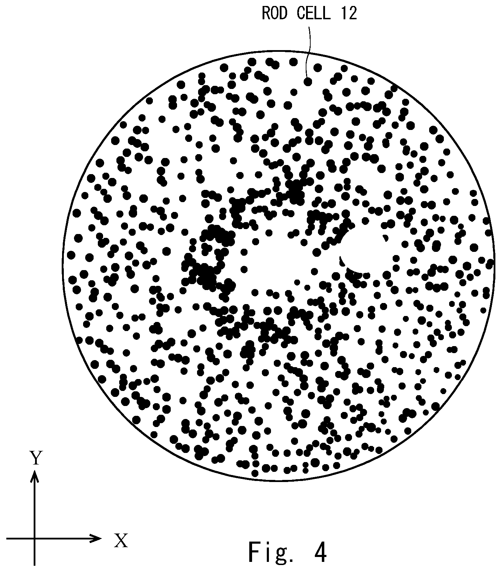

Fig. 4 is a front view for explaining an example of a distribution of the second retina cells (rod cells) in a human eye. Although the rod cells 12 do not recognize colors, they are more sensitive to light than the cone cells 11 are, and hence respond to slight light. Therefore, rod cells 12 can recognize a shape of an object fairly well even in a dark place.

It is a conceptual diagram for explaining an image processing method that imitates different types of retina cells of a human being (i.e., imitates a way a type of retina cells of a human being processes a vision).

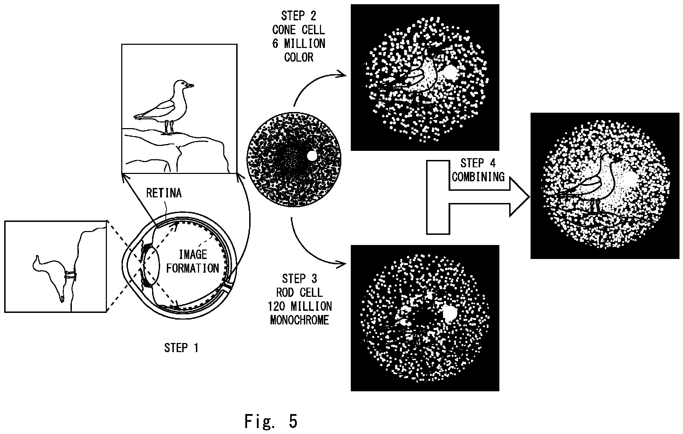

An image of a subject (e.g., a pigeon in Fig. 5) is acquired by using a camera (e.g., an image sensor) (Step 1). Next, first image processing (a compression process) that imitates the first retina cells (e.g., cone cells) of a human eye is performed on the acquired image (Step 2). Based on the distribution of cone cells (e.g., the number of samples is 6 million) like the one shown in Fig. 3, sampling is performed and a process for recognizing color information (e.g., RGB color information, YCbCr information, HSV information, or the like) of an image in each cone cell is performed. The image data after the sampling and the color information corresponding to each cone cell are transmitted to an external device or the like. In this way, it is possible to transmit the image data that has been reduced (i.e., the image data of which the volume has been reduced) by the sampling in the first image processing to the external device or the like.

Similarly, second image processing (a compression process) that imitates the second retina cells (e.g., rod cells) of the human eye is performed on the acquired image (Step 3). Based on the distribution of rod cells (e.g., the number of samples is 120 million) like the one shown in Fig. 4, sampling is performed and a process for reducing color information (e.g., RGB color information, YCbCr information, HSV information, or the like) of an image in each rod cell (i.e., a process for converting into monochrome) is performed. The number of samples in the second image processing is significantly larger than that in the first image processing. The image data after the sampling and the monochrome information corresponding to each rod cell are transmitted to the external device or the like. In this way, it is possible to transmit the image data that has been reduced (i.e., the image data of which the volume has been reduced) by the sampling in the second image processing to the external device or the like. Note that either of the steps 2 and 3 may be performed before the other step.

Lastly, a combining process (e.g., a restoration process) is performed based on the image data and the color information for which the first image processing has been performed and the image data and the monochrome information for which the second image processing has been performed (Step 4). Note that while the number of cone cells is 6 million and that of rod cells is 120 million, there are only about 1 million axons of ganglion cells that transmit visual information to the brain. The brain restores an image from such limited information. By imitating the above-described human visual recognition process, it is possible to apply it to an image transfer system that transfer data through a bandwidth-limited network. Some specific embodiments will be described hereinafter.

### First Embodiment

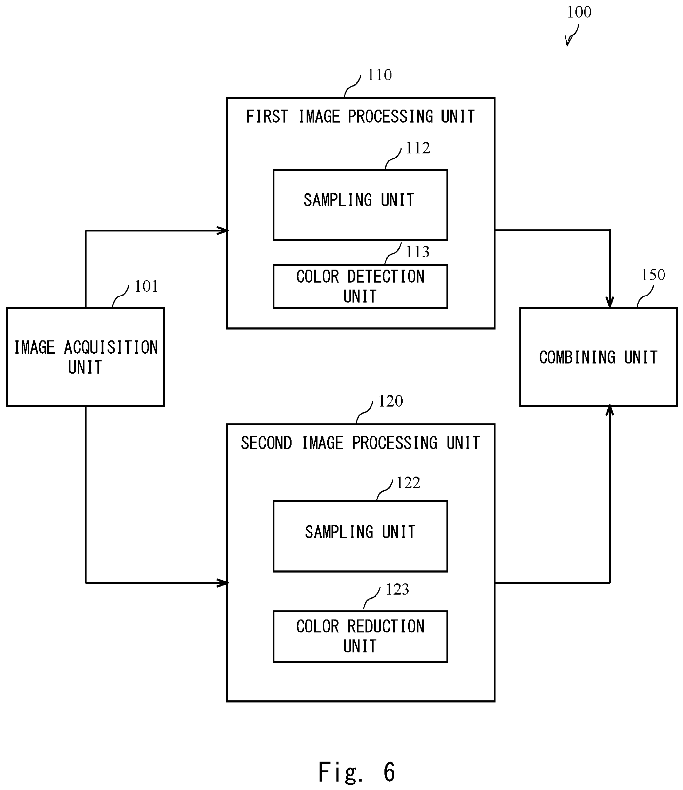

Fig. 6 is a block diagram showing a configuration of an image processing apparatus according to a first embodiment. An image processing apparatus 100 includes an image acquisition unit 101, a first image processing unit 110, a second image processing unit 120, and a combining unit 150. The image processing apparatus 100 is implemented by at least one computer. Although the image processing apparatus 100 shown in Fig. 6 includes all the components therein, some components (e.g., the combining unit 150) may be implemented by another computer that is connected to the image processing apparatus 100 through a network.

The image acquisition unit 101 acquires image data obtained by photographing (or filming) a subject by an image sensor (e.g., a CCD (Charge-Coupled Device) sensor or a CMOS (Complementary MOS) sensor). The image may be a still image or a moving image. The image acquisition unit 101 may be, for example, a camera or may be one that simply acquires image data from a camera.

The first image processing unit 110 performs predetermined image processing (first image processing) imitating first retina cells (e.g., cone cells) on the image data provided from the image acquisition unit 101. The first image processing unit 110 includes a sampling unit 112 and a color detection unit 113.

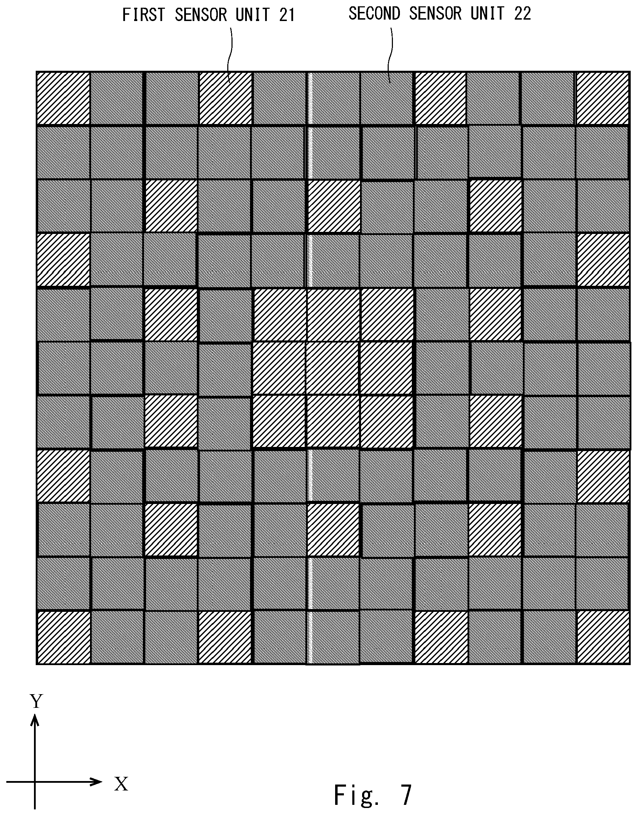

For the image data provided from the image acquisition unit 101, the sampling unit 112 extracts samples based on, for example, a predetermined sampling matrix (a template). Samples that have not been extracted are discarded. The predetermined sampling matrix indicates samples to be extracted from n×m processing blocks (details thereof will be described later with reference to Figs. 7 to 9.). The sampling matrix is determined based on the distribution of first retina cells (e.g., cone cells) like the one shown in Fig. 3. The number of samples to be extracted (a first number) can be arbitrarily set in consideration of the compression ratio of the image. In this way, it is possible to reduce the image data (i.e., the volume of the image data) by the compression sampling process performed by the sampling unit 112.

The color detection unit 113 detects (i.e., obtains) color information (e.g., RGB data) for each of the samples extracted by the sampling unit 112 from the image provided from the image acquisition unit 101.

Further, the first image processing unit 110 can perform an encoding process and various other compression processes. For example, the dynamic range or the luminance range may be compressed by such an extent that no recognition problem occurs.

As described above, the sampled image data and the identified color information are sent to the combining unit 150 by the first image processing imitating processing performed by the first retina cells (e.g., cone cells).

Meanwhile, the second image processing unit 120 also performs predetermined image processing (second image processing) that is different from the first image processing unit 110 and imitates second retina cells (e.g., rod cells) on the image data provided from the image acquisition unit 101. The second image processing unit 120 includes a sampling unit 122 and a color reduction unit 123.

For the image data provided from the image acquisition unit 101, the sampling unit 122 extracts samples based on, for example, a predetermined sampling matrix. The predetermined sampling matrix is determined based on the distribution of second retina cells (e.g., rod cells) like the one shown in Fig. 4. Samples that have not been extracted are discarded. The number of samples to be extracted (a second number) can be set to any number greater than the first number. **In** this way, it is possible to reduce the image data (i.e., the volume of the image data) by the compression sampling process performed by the sampling unit 122.

The color reduction unit 123 reduces the colors (RGB) (i.e., the number of colors) of the image provided from the image acquisition unit 101, and thereby converts it into a monochrome or grayscale image. In this way, it is possible to reduce the image data (i.e., the volume of the image data).

Further, the second image processing unit 120 can also perform an encoding process and various other compression processes. For example, the dynamic range or the luminance range may be compressed by such an extent that no recognition problem occurs.

As described above, the image data, which has been sampled and of which the colors are reduced by the second image processing imitating processing performed by the second retina cells (e.g., rod cells), is sent to the combining unit 150.

The combining unit 150 combines the image data provided from the first image processing unit 110 with the image data provided from the second image processing unit 120. When doing so, the resolution of the image may be enhanced by using deep learning.

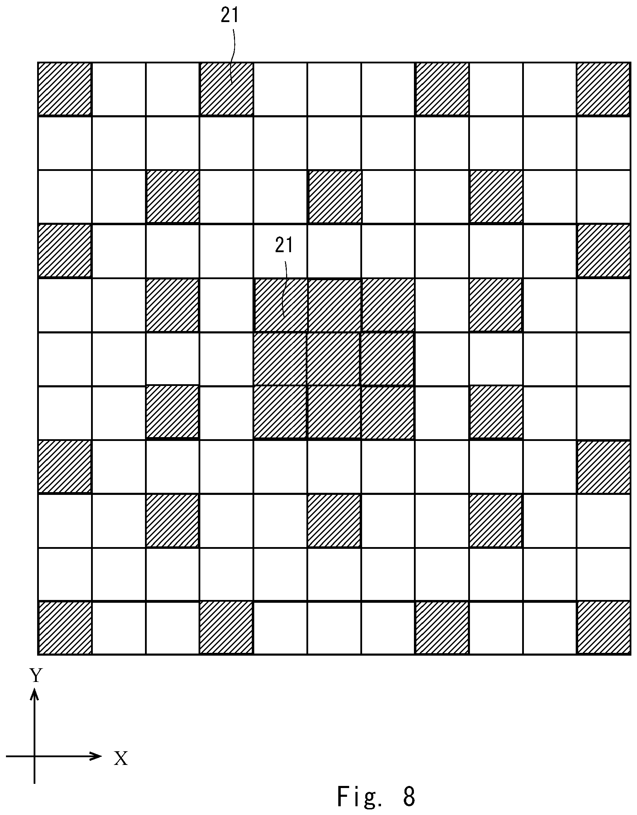

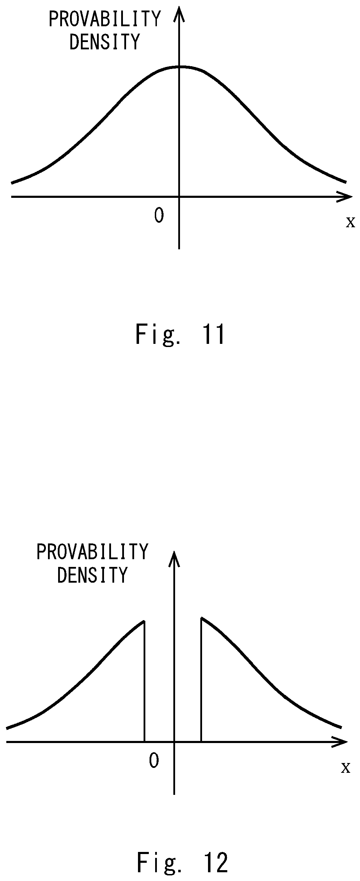

An example of an arrangement in which a plurality of different types of sensor units are distributed will be described with reference to Figs. 7 to 9. Fig. 7 is a front view for explaining an example of a distribution of a plurality of different types of sensor units according to the first embodiment. This is a group of sensors imitating retina cells. In Fig. 7, 11×11 processing blocks are arranged. Among these processing blocks, first sensor units 21 (hatched processing blocks in Fig. 7) correspond to the first retina cells (e.g., cone cells 11). Meanwhile, second sensor units 22 (gray-filled processing blocks in Fig. 8) correspond to the second retina cells (e.g., rod cells 12).

As described above, only one or more first sensor units 21 corresponding to the first retina cells (e.g., cone cells 11) are arranged in the central part of the sampling matrix. Further, one or more second sensor units 22 corresponding to the second retina cells (e.g., rod cells 12) are arranged relatively densely around the central part of the sampling matrix in which one or more first sensor units 21 are densely arranged.

Fig. 8 is a diagram for explaining an example of a distribution of first sensor units (corresponding to cone cells) according to the first embodiment. Among 11×11 processing blocks (121 processing blocks in total) in the sampling matrix, 31 first sensor units are arranged in a distributed manner. As the 3×3 processing blocks in the central part, only the first sensor units 21 are disposed.

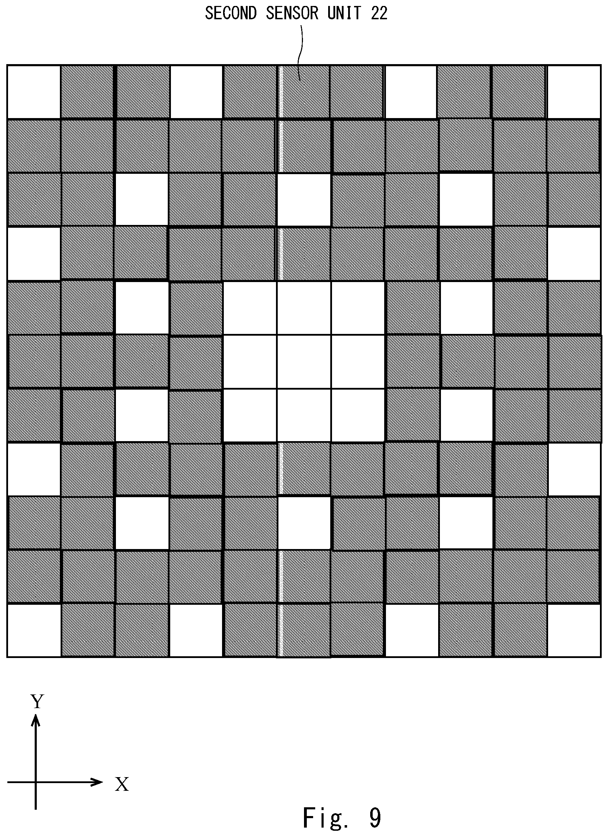

Fig. 9 is a diagram for explaining an example of a distribution of second sensor units (corresponding to rod cells) according to the first embodiment. Among 11×11 processing blocks (121 processing blocks in total) in the sampling matrix, 90 second sensor units are arranged in a distributed manner.

The distributions shown in Figs. 8 and 9 are merely examples, and can be modified and altered in various ways. However, the number of first sensor units, which are configured to recognize colors, is greater than the number of second sensors, which are configured to reduce colors (i.e., the number of colors). Further, in the central part, the first sensor units (corresponding to cone cells) are distributed so that the number of first sensor units is greater than the number of second sensor units. Further, around this central part, the second sensor units are distributed so that the number of second sensor units is greater than the number of first sensor units. Note that, as shown in Figs. 3 and 8, the central part can refer to, in each of the X- and Y-directions, a part of the two central regions among the four equally-divided regions.

According to the above-described embodiment, it is possible to appropriately reduce image data (i.e., the volume of image data) by performing two different image processes imitating visual recognition by a human being. Further, after that, it is possible to appropriately restore the image data by performing a combining process.

### Second Embodiment

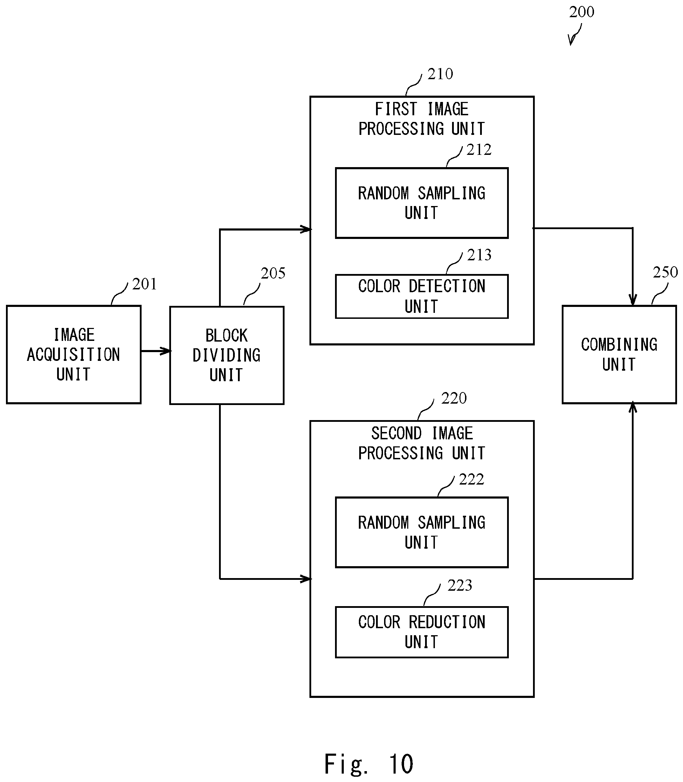

Fig. 10 is a block diagram showing a configuration of an image processing apparatus according to a second embodiment. In the second embodiment, random sampling for extracting samples with a specific probability is performed. Samples that have not been extracted are discarded. That is, regions for which image processing is performed are, instead of being determined by using the predetermined sampling matrix as described above, randomly determined (i.e., selected) from among a large number of divided processing blocks in the image based on a specific probability. This specific probability is determined based on distributions of, among retina cells, first retina cells (e.g., cone cells) or second retina cells (e.g., rod cells) of a large number of human beings (a large number of subjects).

Further, in this embodiment, it is effective to change the distribution according to the object and/or the purpose. For example, in the case of a night-vision camera, high sensitivity is important, so it can be implemented by increasing the ratio corresponding to rod cells. Further, in this embodiment, it is possible to set a spatial distribution of cone cells that is suitable for increasing the accuracy by image processing using machine learning or the like. By setting them according to the purpose, it becomes possible to design a camera that has characteristics that cannot be obtained by an actual human eyeball.

An image processing apparatus 200 includes an image acquisition unit 201, a block dividing unit 205, a first image processing unit 210, a second image processing unit 220, and a combining unit 250. The image processing apparatus 100 is implemented by at least one computer. Although the image processing apparatus 200 shown in Fig. 10 includes all the components therein, some components (e.g., the combining unit 150) may be implemented by another computer that is connected to the image processing apparatus 200 through a network.

The image acquisition unit 201 acquires image data obtained by photographing (or filming) a subject by an image sensor (e.g., a CCD (Charge-Coupled Device) sensor or a CMOS (Complementary MOS) sensor). The image may be a still image or a moving image. The image acquisition unit 201 may be, for example, a camera or may be one that simply acquires image data from a camera.

The block dividing unit 205 divides an image provided from the image acquisition unit 101 into processing block units and supplies them to the first and second image processing units 210 and 220. The processing block units can be arbitrarily set by a person or the like who designs the apparatus or the like. Note that an image is divided into n×m processing blocks. Note that the processing blocks may be arranged at even intervals (see, for example, Figs. 7 to 9), or arranged at uneven intervals as in the case of retina cells (see Figs. 2 to 4).

As shown in Fig. 7, it is possible to increase the apparent sensitivity by adding (binning) the signals of the evenly spaced pixels. However, in the case where 2×2 pixels are treated as one pixel, four signals are added in the signal processing, so the read-out noise from the image sensor is also increased by a factor of four. For this matter, it is possible to reduce the read-out noise if large elements can be disposed (or distributed) in a mixed manner when the semiconductor is designed. In conventional cameras, imaging devices in which large elements are arranged at equal intervals are manufactured, and they are sold as digital cameras. However, even such cases, the size of the elements is only about twice the normal elements, so it is difficult to obtain any dramatic effect. To solve this problem, it is necessary to increase the size of highly sensitive elements. To do so, it is possible to create a place where elements are disposed by randomly arranging processing blocks. Meanwhile, missing places (i.e., places where no elements are disposed) are formed. However, it is possible to compensate for missing information by recording such places, reproducing them, and inferring them by image processing.

The first image processing unit 210 performs predetermined image processing first image processing) imitating first retina cells (e.g., cone cells) on the image data in which the image is divided into a plurality of processing blocks, provided from the block dividing unit 205. The first image processing unit 210 includes a random sampling unit 212 and a color detection unit 213.

The random sampling unit 212 randomly extracts samples from the processing blocks divided by the block dividing unit 205 based on a specific probability. Fig. 11 is a graph showing an example of a probability distribution for a plurality of first sensor units in a specific region. For example, the first sensor units can be randomly sampled based on the probability distribution shown in Fig. 11. The number of samples to be extracted (a first number) can be arbitrarily set in consideration of the compression ratio of the image. As a result, it is possible to extract first sensor units that are distributed in a manner similar to the distribution shown in Fig. 3 or 8 (i.e., a distribution in which first sensor units are densely present in the central part). In this way, it is possible to reduce the image data (i.e., the volume of the image data) by the random sampling process performed by the random sampling unit 212.

The color detection unit 213 recognizes color information (e.g., RGB data) for each of the samples of the image extracted by the random sampling unit 212.

Further, the first image processing unit 210 can perform an encoding process and various other compression processes. For example, the dynamic range or the luminance range may be compressed by such an extent that no recognition problem occurs.

As described above, the sampled image data and the identified color information are sent to the combining unit 250 by the first image processing imitating processing performed by the first retina cells (e.g., cone cells).

Meanwhile, the second image processing unit 220 also performs predetermined image processing (second image processing), which is different from the first image processing unit 210 and imitates second retina cells (e.g., rod cells), on the image data divided into a plurality of processing blocks, provided from the block dividing unit 205. The second image processing unit 220 includes a random sampling unit 222 and a color reduction unit 223.

The random sampling unit 222 randomly extracts samples from processing blocks, which are obtained by having a block dividing unit 221 divide an image, based on a specific probability. Fig. 12 is a graph showing an example of a probability distribution for a plurality of second sensor units in a specific region. For example, it is possible to randomly sample second sensor units based on the probability distribution shown in Fig. 12. As a result, it is possible to extract second sensor units that are distributed in a manner similar to the distribution shown in Fig. 4 or 9 (i.e., a distribution in which second sensor units are densely present around the central part). In this way, it is possible to reduce the image data (i.e., the volume of the image data) by the random sampling process performed by the random sampling unit 222.

The number of samples to be extracted (a second number) can be set to any number greater than the first number. In this way, it is possible to reduce the image data (i.e., reduce the volume of the image data) by the compression sampling process performed by the random sampling unit 222.

The color reduction unit 223 reduces the colors (i.e., the number of colors) of the image provided from the image acquisition unit 201, and thereby converts it into a monochrome or grayscale image. In this way, it is possible to reduce the image data (i.e., the volume of the image data).

Further, the second image processing unit 220 can perform an encoding process and various other compression processes. For example, the dynamic range or the luminance range may be compressed by such an extent that no recognition problem occurs.

As described above, the image data which has been sampled and of which colors have been reduced are sent to the combining unit 250 by the second image processing imitating processing performed by the second retina cells (e.g., rod cells).

The combining unit 250 combines the image data provided from the first image processing unit 210 with the image data provided from the second image processing unit 220. When doing so, the resolution of the image may be enhanced by using deep learning.

According to the above-described embodiment, it is possible to appropriately reduce image data (i.e., the volume of image data) by performing two different image processes imitating visual recognition by a human being, and then to appropriately restore the image data by performing a combining process. Further, it is possible to change the distribution according to the object and/or the purpose by performing random sampling.

### Third Embodiment

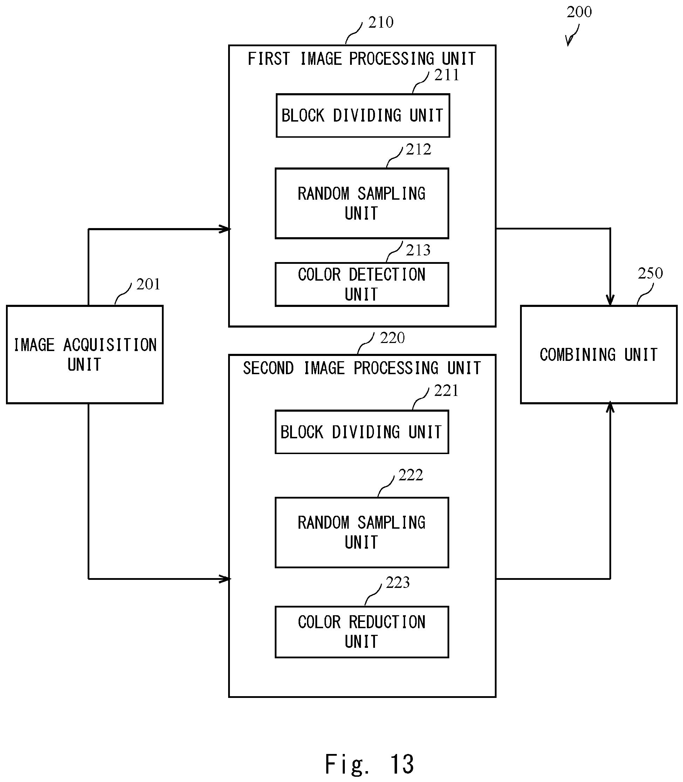

A third embodiment is a modified example of the second embodiment. In Fig. 13, the same reference numerals (or symbols) as those in Fig. 10 are assigned to the same components as those in the second embodiment, and descriptions thereof are omitted as appropriate. In the third embodiment, the first image processing unit 210 includes a block dividing unit 211, and the second image processing unit 220 includes a block dividing unit 221.

In this embodiment, the block dividing units 211 and 221 may perform dividing processes different from each other. The block dividing unit 211 divides an image into n×m processing blocks. Note that the processing blocks may be arranged at even intervals (see, for example, Figs. 7 to 9), or arranged at uneven intervals as in the case of retina cells (see Figs. 2 to 4). The random sampling unit 212 performs random sampling on the image, which has been divided into n×m processing blocks. As described above, it is possible to randomly sample first sensor units based on the probability distribution shown in Fig. 11.

The block dividing unit 221 divides the image into n×m processing blocks. The number of processing blocks divided by the block dividing unit 221 may be different from the number of processing blocks divided by the block dividing unit 211. Note that the processing blocks may be arranged at even intervals (see, for example, Figs. 7 to 9), or arranged at uneven intervals as in the case of retina cells (see Figs. 2 to 4). The random sampling unit 222 performs random sampling on the image, which has been divided into n×m processing blocks. As described above, it is possible to randomly sample second sensor units based on the probability distribution shown in Fig. 12.

According to the above-described embodiment, it is possible to appropriately reduce image data (i.e., the volume of image data) by performing two different image processes imitating visual recognition by a human being, and then to appropriately restore the image data by performing a combining process.

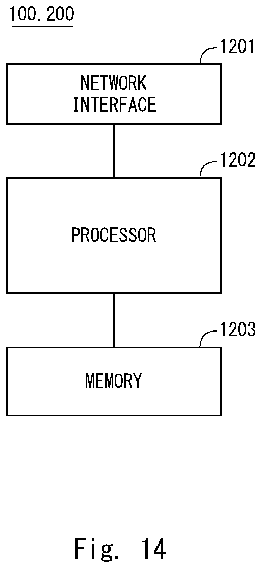

Fig. 14 is a block diagram showing an example of a hardware configuration of each of the image processing apparatuses 100 and 200 (hereinafter referred to as the image processing apparatus 100 or the like). Referring to Fig. 14, the image processing apparatus 100 or the like includes a network interface 1201, a processor 1202, and a memory 1203. The network interface 1201 is used to communicate with other network node apparatuses constituting a communication system. The network interface 1201 may be used to perform wireless communication. For example, the network interface 1201 may be used to perform wireless LAN communication specified in IEEE 802.11 series or perform mobile communication specified in 3GPP (3rd Generation Partnership Project). Alternatively, the network interface 1201 may include, for example, a network interface card (NIC) in conformity with IEEE 802.3 series.

The processor 1202 performs processes performed by the image processing apparatus 100, 200 or the like explained above with reference to a flowchart or a sequence in the above-described embodiments by loading software (a computer program) from the memory 1203 and executing the loaded software. The processor 1202 may be, for example, a microprocessor, an MPU (Micro Processing Unit), or a CPU (Central Processing Unit). The processor 1202 may include a plurality of processors.

The memory 1203 is formed by a combination of a volatile memory and a nonvolatile memory. The memory 1203 may include a storage disposed remotely from the processor 1202. In this case, the processor 1202 may access the memory 1203 through an I/O interface (not shown).

In the example shown in Fig. 14, the memory 1203 is used to store a group of software modules. The processor 1202 performs processes performed by the image processing apparatus 100, 200 or the like explained above in the above-described embodiments by loading software from the memory 1203 and executing the loaded software.

As explained above with reference to Fig. 14, each of the processors included in the image processing apparatus 100 or the like in the above-described embodiments executes one or a plurality of programs including a group of instructions for causing a computer to perform an algorithm explained above with reference to the drawings.

As described above, the combining unit 150 can be implemented by a computer separate from the image processing apparatus. Therefore, in this case, the hardware configuration of the combining unit 150 is the same as that shown in Fig. 14.

Further, the disclosure may also take a form of an image processing method as a procedure of processes performed in the image processing apparatus has been explained in the above-described various embodiments. The image processing method includes a step of acquiring an image; a step of performing first image processing on the acquired image, and including performing first sampling for extracting at least one sample to be processed from the acquired image, and detecting colors of the at least one extracted sample; and a step of performing second image processing different from the first image processing on the acquired image, and including performing second sampling for extracting at least one sample to be processed from the acquired image, and reducing the colors of the at least one extracted sample. Note that other examples are as described above in the above-described various embodiments. Further, an image processing program is a program for causing a computer to perform such an image processing method.

In the above-described example, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, DVD (Digital Versatile Disc), BD (Blu-ray (Registered Trademark) Disc), and semiconductor memories (such as mask ROM, PROM (Programmable ROM), EPROM (Erasable PROM), flash ROM, and RAM (Random Access Memory)). Further, the program may be provided to a computer using any type of transitory computer readable media. Examples of transitory computer readable media include electric signals, optical signals, and electromagnetic waves. Transitory computer readable media can provide the program to a computer through a wired communication line (e.g., electric wires, and optical fibers) or a wireless communication line.

Note that the present invention is not limited to the above-described embodiments, and they may be modified as appropriate without departing from the scope of the invention as defined in the appended claims. For example, although retina cells of an eye of a human being have been mainly described in the above-described embodiments, the present disclosure can also be applied to retina cells of other vertebrates.

This application is based upon and claims the benefit of priority from Japanese patent application No. 2020-170261, filed on October 8, 2020.

### Reference Signs List

- 11: CONE CELL
- 12: ROD CELL
- 21: FIRST SENSOR UNIT
- 22: SECOND SENSOR UNIT
- 100: IMAGE PROCESSING APPARATUS
- 101: IMAGE ACQUISITION UNIT
- 110: FIRST IMAGE PROCESSING UNIT
- 112: SAMPLING UNIT
- 113: COLOR DETECTION UNIT
- 120: SECOND IMAGE PROCESSING UNIT
- 122: SAMPLING UNIT
- 123: COLOR REDUCTION UNIT
- 150: COMBINING UNIT
- 200: IMAGE PROCESSING APPARATUS
- 201: IMAGE ACQUISITION UNIT
- 205: BLOCK DIVIDING UNIT
- 210: FIRST IMAGE PROCESSING UNIT
- 211: BLOCK DIVIDING UNIT
- 212: RANDOM SAMPLING UNIT
- 213: COLOR DETECTION UNIT
- 220: SECOND IMAGE PROCESSING UNIT
- 221: BLOCK DIVIDING UNIT
- 222: RANDOM SAMPLING UNIT
- 223: COLOR REDUCTION UNIT
- 250: COMBINING UNIT
- 300: EYE
- 302: PUPIL
- 303: CRYSTALLINE LENS
- 310: FOVEA
- 312: MACULAR AREA
- 320: RETINA
- 340: OPTIC NERVE
- 345: OPTIC DISC

## Claims

1. An image processing apparatus (100, 200) for imitating two different types of retina cells of a vertebrate, comprising:
an image acquisition unit (101, 201) configured to acquire a color image;
a first image processing unit (110, 210) configured to perform first image processing on the acquired image for imitating processing performed by first retina cells among the retina cells of the vertebrate, and including a first sampling unit (112, 212) configured to perform first sampling for extracting at least one sample to be processed from the acquired image, based on a distribution of the first retina cells, and a color detection unit (113, 213) configured to detect colors of the at least one extracted sample; and
a second image processing unit (120, 220) configured to perform second image processing different from the first image processing on the acquired image for imitating processing performed by second retina cells among the retina cells of the vertebrate, and including a second sampling unit (122, 222) configured to perform second sampling for extracting at least one sample to be processed from the acquired image, based on a distribution of the second retina cells,
the second image processing unit (120, 220) further including a color reduction unit (123, 223) configured to reduce the colors of the at least one extracted sample thereby converting the at least one extracted sample into monochrome or grayscale data.

2. The image processing apparatus according to Claim 1,
wherein the number of samples extracted by the first sampling unit (112) is less than the number of samples extracted by the second sampling unit (122).

3. The image processing apparatus according to Claim 1,
wherein the first retina cells are cone cells and the second retina cells are rod cells.

4. The image processing apparatus according to Claim 1,
wherein
the first sampling unit (112, 212) performs first sampling based on a sampling matrix defined based on a distribution of the first retina cells, and
the second sampling unit (122, 222) performs second sampling based on a sampling matrix defined based on a distribution of the second retina cells.

5. The image processing apparatus according to Claim 1,
wherein
the first sampling unit (112, 212) performs first random sampling according to a probability distribution determined based on a distribution of the first retina cells, and
the second sampling unit (122, 222) performs second random sampling according to a probability distribution determined based on a distribution of the second retina cells.

6. The image processing apparatus according to Claim 4 or 5,
wherein
in the distribution of the first retina cells, a greater number of first retina cells are densely present in a central part than the number of second retina cells, and
in the distribution of the second retina cells, a greater number of second retina cells are densely present around the central part than the number of first retina cells.

7. The image processing apparatus according to any one of Claims 1 to 6, further comprising a combining unit (150, 250) configured to combine image data processed by the first image processing unit (110, 210) with image data processed by the second image processing unit (120, 220).

8. An image processing method for imitating two different types of retina cells of a vertebrate, comprising:
a step of acquiring a color image;
a step of performing first image processing on the acquired image for imitating processing performed by first retina cells among the retina cells of the vertebrate, and including performing first sampling for extracting at least one sample to be processed from the acquired image, based on a distribution of the first retina cells, and detecting colors of the at least one extracted sample;
a step of performing second image processing different from the first image processing on the acquired image for imitating processing performed by second retina cells among the retina cells of the vertebrate, and including performing second sampling for extracting at least one sample to be processed from the acquired image, based on a distribution of the second retina cells, and
a step of performing second image processing further including reducing the colors of the at least one extracted sample thereby converting the at least one extracted sample into monochrome or grayscale data.

9. The image processing method according to Claim 8, wherein the number of samples extracted by the first sampling is less than the number of samples extracted by the second sampling.

10. The image processing method according to Claim 8, wherein
in the step of performing the first image processing, first image processing imitating processing performed by first retina cells among retina cells of a vertebrate is performed, and
in the step of performing the second image processing, second image processing imitating processing performed by second retina cells among the retina cells of the vertebrate is performed.

11. The image processing method according to Claim 10,
wherein the first retina cells are cone cells and the second retina cells are rod cells.

12. The image processing method according to Claim 10,
wherein
in the first sampling, first sampling is performed based on a sampling matrix defined based on a distribution of the first retina cells, and
in the second sampling, second sampling is performed based on a sampling matrix defined based on a distribution of the second retina cells.

13. The image processing method according to Claim 10,
wherein
in the first sampling, first random sampling is performed according to a probability distribution determined based on a distribution of the first retina cells, and
in the second sampling, second random sampling is performed according to a probability distribution determined based on a distribution of the second retina cells.

14. The image processing method according to Claim 12 or 13,
wherein
in the distribution of the first retina cells, a greater number of first retina cells are densely present in a central part than the number of second retina cells, and
in the distribution of the second retina cells, a greater number of second retina cells are densely present around the central part than the number of first retina cells.

15. The image processing method according to any one of Claims 8 to 14, further comprising a step of combining image data processed in the first image processing with image data processed in the second image processing.

16. Image processing program for imitating two different types of retina cells of a vertebrate for causing a computer to perform operations including:
a process for acquiring a color image;
a process for performing first image processing on the acquired image for imitating processing performed by first retina cells among the retina cells of the vertebrate, and including performing first sampling for extracting at least one sample to be processed from the acquired image, based on a distribution of the first retina cells, and detecting colors of the at least one extracted sample; and
a process for performing second image processing different from the first image processing on the acquired image for imitating processing performed by second retina cells among the retina cells of the vertebrate, and including performing second sampling for extracting at least one sample to be processed from the acquired image, based on a distribution of the second retina cells,
the process for performing second image processing further including reducing the colors of the at least one extracted sample thereby converting the at least one extracted sample into monochrome or grayscale data.

## Patentansprüche

1. Bildverarbeitungsvorrichtung (100, 200) zum Imitieren von zwei verschiedenen Arten von Netzhautzellen eines Wirbeltieres, umfassend:
eine Bilderwerbungseinheit (101, 201), die eingerichtet ist, ein Farbbild zu erwerben;
eine erste Bildverarbeitungseinheit (110, 210), die eingerichtet ist, eine erste Bildverarbeitung an dem erworbenen Bild durchzuführen, um eine Verarbeitung zu imitieren, die von ersten Netzhautzellen unter den Netzhautzellen des Wirbeltiers durchgeführt wird, und die eine erste Abtasteinheit (112, 212) enthält, die eingerichtet ist, erste Abtastung durchzuführen, um mindestens eine zu verarbeitende Probe aus dem erworbenen Bild auf der Grundlage einer Verteilung der ersten Netzhautzellen zu extrahieren, und eine Farberfassungseinheit (113, 213) enthält, die eingerichtet ist, Farben der mindestens einen extrahierten Probe zu erfassen; und
eine zweite Bildverarbeitungseinheit (120, 220), die eingerichtet ist, an dem erworbenen Bild eine zweite Bildverarbeitung durchzuführen, die sich von der ersten Bildverarbeitung unterscheidet, um eine Verarbeitung zu imitieren, die von zweiten Netzhautzellen unter den Netzhautzellen des Wirbeltiers durchgeführt wird, und die eine zweite Abtasteinheit (122, 222) enthält, die eingerichtet ist, eine zweite Abtastung durchzuführen, um mindestens eine zu verarbeitende Probe aus dem erworbenen Bild zu extrahieren, basierend auf einer Verteilung der zweiten Netzhautzellen,
wobei die zweite Bildverarbeitungseinheit (120, 220) ferner eine Farbreduktionseinheit (123, 223) enthält, die eingerichtet ist, die Farben der mindestens einen extrahierten Probe zu reduzieren, wodurch die mindestens eine extrahierte Probe in monochrome oder Graustufendaten umgewandelt wird.

2. Bildverarbeitungsvorrichtung nach Anspruch 1, wobei die Anzahl der durch die erste Abtasteinheit (112) extrahierten Probe geringer ist als die Anzahl der durch die zweite Abtasteinheit (122) extrahierten Proben.

3. Bildverarbeitungsvorrichtung nach Anspruch 1, wobei die ersten Netzhautzellen Zapfenzellen und die zweiten Netzhautzellen Stäbchenzellen sind.

4. Bildverarbeitungsvorrichtung nach Anspruch 1, wobei
die erste Abtasteinheit (112, 212) eine erste Abtastung auf der Basis einer Abtastmatrix durchführt, die auf der Grundlage einer Verteilung der ersten Netzhautzellen definiert ist, und
die zweite Abtasteinheit (122, 222) eine zweite Abtastung auf der Grundlage einer Abtastmatrix durchführt, die auf der Grundlage einer Verteilung der zweiten Netzhautzellen definiert ist.

5. Bildverarbeitungsvorrichtung nach Anspruch 1, wobei
die erste Abtasteinheit (112, 212) eine erste Zufallsabtastung gemäß einer Wahrscheinlichkeitsverteilung durchführt, die auf der Grundlage einer Verteilung der ersten Netzhautzellen bestimmt wird, und
die zweite Abtasteinheit (122, 222) eine zweite Zufallsabtastung gemäß einer Wahrscheinlichkeitsverteilung durchführt, die auf der Grundlage einer Verteilung der zweiten Netzhautzellen bestimmt wird.

6. Bildverarbeitungsvorrichtung nach Anspruch 4 oder 5, wobei
in der Verteilung der ersten Netzhautzellen eine größere Anzahl erster Netzhautzellen in einem zentralen Teil dicht vorhanden ist als die Anzahl zweiter Netzhautzellen, und
bei der Verteilung der zweiten Netzhautzellen eine größere Anzahl von zweiten Netzhautzellen dicht um den zentralen Teil herum vorhanden ist als die Anzahl der ersten Netzhautzellen.

7. Bildverarbeitungsvorrichtung nach einem der Ansprüche 1 bis 6, ferner umfassend eine Kombinationseinheit (150, 250), die eingerichtet ist, von der ersten Bildverarbeitungseinheit (110, 210) verarbeitete Bilddaten mit von der zweiten Bildverarbeitungseinheit (120, 220) verarbeiteten Bilddaten zu kombinieren.

8. Bildverarbeitungsverfahren zum Imitieren von zwei verschiedenen Typen von Netzhautzellen eines Wirbeltiers, umfassend:
einen Schritt des Erwerbens eines Farbbildes;
einen Schritt des Durchführens einer ersten Bildverarbeitung an dem erworbenen Bild zum Imitieren einer Verarbeitung, die von ersten Netzhautzellen unter den Netzhautzellen des Wirbeltiers durchgeführt wird, und einschließlich des Durchführens einer ersten Abtastung zum Extrahieren mindestens einer zu verarbeitenden Probe aus dem erworbenen Bild, basierend auf einer Verteilung der ersten Netzhautzellen, und des Erfassens von Farben der mindestens einen extrahierten Probe;
einen Schritt des Durchführens einer zweiten Bildverarbeitung, die sich von der ersten Bildverarbeitung auf dem erworbenen Bild unterscheidet, um eine Verarbeitung zu imitieren, die von zweiten Netzhautzellen unter den Netzhautzellen des Wirbeltiers durchgeführt wird, und einschließlich des Durchführens einer zweiten Abtastung zum Extrahieren mindestens einer zu verarbeitenden Probe aus dem erworbenen Bild, basierend auf einer Verteilung der zweiten Netzhautzellen, und
einen Schritt des Durchführens einer zweiten Bildverarbeitung, der ferner die Reduzierung der Farben der mindestens einen extrahierten Probe umfasst, wodurch die mindestens eine extrahierte Probe in monochrome oder Graustufendaten umgewandelt wird.

9. Bildverarbeitungsverfahren nach Anspruch 8, wobei die Anzahl der durch die erste Abtastung extrahierten Proben geringer ist als die Anzahl der durch die zweite Abtastung extrahierten Proben.

10. Bildverarbeitungsverfahren nach Anspruch 8, wobei
in dem Schritt des Durchführens der ersten Bildverarbeitung eine erste Bildverarbeitung durchgeführt wird, die eine Verarbeitung imitiert, die von ersten Netzhautzellen unter den Netzhautzellen eines Wirbeltiers durchgeführt wird, und
in dem Schritt der Durchführung der zweiten Bildverarbeitung eine zweite Bildverarbeitung durchgeführt wird, die eine von zweiten Netzhautzellen unter den Netzhautzellen des Wirbeltiers durchgeführte Verarbeitung imitiert.

11. Bildverarbeitungsverfahren nach Anspruch 10, wobei es sich bei den ersten Netzhautzellen um Zapfenzellen und bei den zweiten Netzhautzellen um Stäbchenzellen handelt.

12. Bildverarbeitungsverfahren nach Anspruch 10, wobei
bei der ersten Abtastung das erste Abtasten auf der Grundlage einer Abtastmatrix durchgeführt wird, die auf der Grundlage einer Verteilung der ersten Netzhautzellen definiert ist, und
bei der zweiten Abtastung das zweite Abtasten auf der Grundlage einer Abtastmatrix durchgeführt wird, die auf der Grundlage einer Verteilung der zweiten Netzhautzellen definiert ist.

13. Bildverarbeitungsverfahren nach Anspruch 10, wobei
bei der ersten Abtastung eine erste Zufallsabtastung gemäß einer Wahrscheinlichkeitsverteilung durchgeführt wird, die auf der Grundlage einer Verteilung der ersten Netzhautzellen bestimmt wird, und
bei der zweiten Abtastung die zweite Zufallsabtastung gemäß einer Wahrscheinlichkeitsverteilung durchgeführt wird, die auf der Grundlage einer Verteilung der zweiten Netzhautzellen bestimmt wird.

14. Bildverarbeitungsverfahren nach Anspruch 12 oder 13, wobei
in der Verteilung der ersten Netzhautzellen eine größere Anzahl erster Netzhautzellen in einem zentralen Teil dicht vorhanden ist als die Anzahl zweiter Netzhautzellen, und
bei der Verteilung der zweiten Netzhautzellen eine größere Anzahl von zweiten Netzhautzellen dicht um den zentralen Teil herum vorhanden ist als die Anzahl der ersten Netzhautzellen.

15. Bildverarbeitungsverfahren nach einem der Ansprüche 8 bis 14, ferner umfassend einen Schritt des Kombinierens von in der ersten Bildverarbeitung verarbeiteten Bilddaten mit in der zweiten Bildverarbeitung verarbeiteten Bilddaten.

16. Bildverarbeitungsprogramm zum Imitieren von zwei verschiedenen Arten von Netzhautzellen eines Wirbeltieres, um einen Computer zu veranlassen, Operationen durchzuführen, die umfassen:
einen Prozess zum Erwerben eines Farbbildes;
einen Prozess zum Durchführen einer ersten Bildverarbeitung an dem erworbenen Bild zum Imitieren einer Verarbeitung, die von ersten Netzhautzellen unter den Netzhautzellen des Wirbeltiers durchgeführt wird, und einschließlich des Durchführens einer ersten Abtastung zum Extrahieren mindestens einer zu verarbeitenden Probe aus dem erworbenen Bild, basierend auf einer Verteilung der ersten Netzhautzellen, und des Erfassens von Farben der mindestens einen extrahierten Probe; und
einen Prozess zum Durchführen einer zweiten Bildverarbeitung, die sich von der ersten Bildverarbeitung auf dem erworbenen Bild unterscheidet, um eine Verarbeitung zu imitieren, die von zweiten Netzhautzellen unter den Netzhautzellen des Wirbeltiers durchgeführt wird, und einschließlich des Durchführens einer zweiten Abtastung zum Extrahieren mindestens einer zu verarbeitenden Probe aus dem erworbenen Bild, basierend auf einer Verteilung der zweiten Netzhautzellen,
einen Schritt zum Durchführe einer zweiten Bildverarbeitung, der ferner die Reduzierung der Farben der mindestens einen extrahierten Probe umfasst, wodurch die mindestens eine extrahierte Probe in monochrome oder Graustufendaten umgewandelt wird.

## Revendications

1. Appareil de traitement d'image (100, 200) pour imiter deux types différents de cellules rétiniennes d'un vertébré, comprenant :
une unité d'acquisition d'image (101, 201) configurée pour acquérir une image couleur ;
une unité de premier traitement d'image (110, 210) configurée pour réaliser un premier traitement d'image sur l'image acquise pour imiter un traitement qui est réalisé par des premières cellules rétiniennes parmi les cellules rétiniennes du vertébré, et incluant une unité de premier échantillonnage (112, 212) configurée pour réaliser un premier échantillonnage pour extraire au moins un échantillon à traiter à partir de l'image acquise, sur la base d'une distribution des premières cellules rétiniennes, et une unité de détection de couleur (113, 213) configurée pour détecter des couleurs de l'au moins un échantillon extrait ; et
une unité de second traitement d'image (120, 220) configurée pour réaliser un second traitement d'image différent du premier traitement d'image sur l'image acquise pour imiter un traitement qui est réalisé par des secondes cellules rétiniennes parmi les cellules rétiniennes du vertébré, et incluant une unité de second échantillonnage (122, 222) configurée pour réaliser un second échantillonnage pour extraire au moins un échantillon à traiter à partir de l'image acquise, sur la base d'une distribution des secondes cellules rétiniennes,
l'unité de second traitement d'image (120, 220) incluant en outre une unité de réduction de couleurs (123, 223) configurée pour réduire les couleurs de l'au moins un échantillon extrait afin d'ainsi convertir l'au moins un échantillon extrait selon des données monochromes ou d'échelle de gris.

2. Appareil de traitement d'image selon la revendication 1, dans lequel le nombre d'échantillons qui sont extraits par la première unité d'échantillonnage (112) est inférieur au nombre d'échantillons qui sont extraits par la seconde unité d'échantillonnage (122).

3. Appareil de traitement d'image selon la revendication 1, dans lequel les premières cellules rétiniennes sont des cellules en cônes et les secondes cellules rétiniennes sont des cellules en bâtonnets.

4. Appareil de traitement d'image selon la revendication 1, dans lequel :
l'unité de premier échantillonnage (112, 212) réalise un premier échantillonnage sur la base d'une matrice d'échantillonnage qui est définie sur la base d'une distribution des premières cellules rétiniennes ; et
l'unité de second échantillonnage (122, 222) réalise un second échantillonnage sur la base d'une matrice d'échantillonnage qui est définie sur la base d'une distribution des secondes cellules rétiniennes.

5. Appareil de traitement d'image selon la revendication 1, dans lequel :
l'unité de premier échantillonnage (112, 212) réalise un premier échantillonnage aléatoire conformément à une distribution de probabilité qui est déterminée sur la base d'une distribution des premières cellules rétiniennes ; et
l'unité de second échantillonnage (122, 222) réalise un second échantillonnage aléatoire conformément à une distribution de probabilité qui est déterminée sur la base d'une distribution des secondes cellules rétiniennes.

6. Appareil de traitement d'image selon la revendication 4 ou 5, dans lequel :
dans la distribution des premières cellules rétiniennes, des premières cellules rétiniennes selon un nombre plus grand que le nombre de secondes cellules rétiniennes sont présentes de façon dense dans une partie centrale ; et
dans la distribution des secondes cellules rétiniennes, des secondes cellules rétiniennes selon un nombre plus grand que le nombre de premières cellules rétiniennes sont présentes de façon dense autour de la partie centrale.

7. Appareil de traitement d'image selon l'une quelconque des revendications 1 à 6, comprenant en outre une unité de combinaison (150, 250) configurée pour combiner des données d'image qui ont été traitées par l'unité de premier traitement d'image (110, 210) avec des données d'image qui ont été traitées par l'unité de second traitement d'image (120, 220).

8. Procédé de traitement d'image pour imiter deux types différents de cellules rétiniennes d'un vertébré, comprenant :
une étape d'acquisition d'une image couleur ;
une étape de réalisation d'un premier traitement d'image sur l'image acquise pour imiter un traitement qui est réalisé par des premières cellules rétiniennes parmi les cellules rétiniennes du vertébré, et incluant la réalisation d'un premier échantillonnage pour extraire au moins un échantillon à traiter à partir de l'image acquise, sur la base d'une distribution des premières cellules rétiniennes, et une détection de couleurs de l'au moins un échantillon extrait ; et
une étape de réalisation d'un second traitement d'image différent du premier traitement d'image sur l'image acquise pour imiter un traitement qui est réalisé par des secondes cellules rétiniennes parmi les cellules rétiniennes du vertébré, et incluant la réalisation d'un second échantillonnage pour extraire au moins un échantillon à traiter à partir de l'image acquise, sur la base d'une distribution des secondes cellules rétiniennes,
l'étape de réalisation du second traitement d'image incluant en outre la réduction des couleurs de l'au moins un échantillon extrait afin d'ainsi convertir l'au moins un échantillon extrait selon des données monochromes ou d'échelle de gris.

9. Procédé de traitement d'image selon la revendication 8, dans lequel le nombre d'échantillons qui sont extraits par le premier échantillonnage est inférieur au nombre d'échantillons qui sont extraits par le second échantillonnage.

10. Procédé de traitement d'image selon la revendication 8, dans lequel :
lors de l'étape de réalisation du premier traitement d'image, un premier traitement d'image qui imite un traitement qui est réalisé par des premières cellules rétiniennes parmi les cellules rétiniennes d'un vertébré est réalisé ; et
lors de l'étape de réalisation du second traitement d'image, un second traitement d'image qui imite un traitement qui est réalisé par des secondes cellules rétiniennes parmi les cellules rétiniennes du vertébré est réalisé.

11. Procédé de traitement d'image selon la revendication 10, dans lequel les premières cellules rétiniennes sont des cellules en cônes et les secondes cellules rétiniennes sont des cellules en bâtonnets.

12. Procédé de traitement d'image selon la revendication 10, dans lequel :
lors du premier échantillonnage, un premier échantillonnage est réalisé sur la base d'une matrice d'échantillonnage qui est définie sur la base d'une distribution des premières cellules rétiniennes ; et
lors du second échantillonnage, un second échantillonnage est réalisé sur la base d'une matrice d'échantillonnage qui est définie sur la base d'une distribution des secondes cellules rétiniennes.

13. Procédé de traitement d'image selon la revendication 10, dans lequel :
lors du premier échantillonnage, un premier échantillonnage aléatoire est réalisé conformément à une distribution de probabilité qui est déterminée sur la base d'une distribution des premières cellules rétiniennes ; et
lors du second échantillonnage, un second échantillonnage aléatoire est réalisé conformément à une distribution de probabilité qui est déterminée sur la base d'une distribution des secondes cellules rétiniennes.

14. Procédé de traitement d'image selon la revendication 12 ou 13, dans lequel :
dans la distribution des premières cellules rétiniennes, des premières cellules rétiniennes selon un nombre plus grand que le nombre de secondes cellules rétiniennes sont présentes de façon dense dans une partie centrale ; et
dans la distribution des secondes cellules rétiniennes, des secondes cellules rétiniennes selon un nombre plus grand que le nombre de premières cellules rétiniennes sont présentes de façon dense autour de la partie centrale.

15. Procédé de traitement d'image selon l'une quelconque des revendications 8 à 14, comprenant en outre une étape de combinaison de données d'image qui ont été traitées lors du premier traitement d'image avec des données d'image qui ont été traitées lors du second traitement d'image.

16. Programme de traitement d'image pour imiter deux types différents de cellules rétiniennes d'un vertébré pour forcer un ordinateur à réaliser les opérations incluant :
un processus pour acquérir une image couleur ;
un processus pour réaliser un premier traitement d'image sur l'image acquise pour imiter un traitement qui est réalisé par des premières cellules rétiniennes parmi les cellules rétiniennes du vertébré, et incluant la réalisation d'un premier échantillonnage pour extraire au moins un échantillon à traiter à partir de l'image acquise, sur la base d'une distribution des premières cellules rétiniennes, et la détection de couleurs de l'au moins un échantillon extrait ; et
un processus pour réaliser un second traitement d'image différent du premier traitement d'image sur l'image acquise pour imiter un traitement qui est réalisé par des secondes cellules rétiniennes parmi les cellules rétiniennes du vertébré, et incluant la réalisation d'un second échantillonnage pour extraire au moins un échantillon à traiter à partir de l'image acquise, sur la base d'une distribution des secondes cellules rétiniennes,
le processus pour réaliser le second traitement d'image incluant en outre la réduction des couleurs de l'au moins un échantillon extrait afin d'ainsi convertir l'au moins un échantillon extrait selon des données monochromes ou d'échelle de gris.
